(19) Europäisches Patentamt
European Patent Office
Office européen des brevets

(11) Publication number: **0 156 030**
**B1**

# (12) EUROPEAN PATENT SPECIFICATION

(45) Date of publication of patent specification: **10.06.87**

(51) Int. Cl.$^4$: **C 09 K 7/02,** E 21 B 43/22

(21) Application number: **84115971.8**

(22) Date of filing: **13.12.82**

(60) Publication number of the earlier application in accordance with Art. 76 EPC: **0 082 657**

## (54) Aqueous drilling fluid.

(30) Priority: **15.12.81 US 331101**
**15.12.81 US 331102**
**17.05.82 US 378921**
**25.08.82 US 411174**
**25.08.82 US 411167**
**25.08.82 US 411173**
**25.08.82 US 411182**

(43) Date of publication of application:
**02.10.85 Bulletin 85/40**

(45) Publication of the grant of the patent:
**10.06.87 Bulletin 87/24**

(84) Designated Contracting States:
**BE DE GB IT NL SE**

(56) References cited:
**GB-A-2 044 321**
**US-A-3 679 000**
**US-A-3 744 566**
**US-A-4 077 930**
**US-A-4 137 969**
**US-A-4 293 427**

(73) Proprietor: **CALGON CORPORATION**
**Route 60-Campbell's Run Road**
**Robinson Township Pennsylvania 15205 (US)**

(72) Inventor: **Costello, Christine A.**
**116 Essex Knoll Drive**
**Coraopolis Pennsylvania 15108 (US)**
Inventor: **Matz, Gary F.**
**408 Wall Avenue**
**Pitcairn Pennsylvania 15140 (US)**
Inventor: **Sherwood, Nancy S.**
**422 Scottsdale Drive**
**Coraopolis Pennsylvania 15108 (US)**
Inventor: **Boffardi, Bennett P.**
**5723 Glen Hill Drive**
**Bethel Park Pennsylvania 15102 (US)**
Inventor: **Yorke, Monica A.**
**1408 State Avenue**
**Coraopolis Pennsylvania 15108 (US)**
Inventor: **Amjad, Zahid**
**29331 Detroit Road Suite 5**
**West Lake Ohio 44145 (US)**

(74) Representative: **Crampton, Keith John Allen et al**
**D YOUNG & CO 10 Staple Inn**
**London WC1V 7RD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 156 030 B1**

**Description**

Polyampholytes are polymers containing both a cationic and an anionic mer unit, nonionic mer units optionally being present. Polyampholytes have found particular use as retention aids in the paper industry (see for example, U.S. Patents US—A—3,639,208 and US—A—4,171,417). There has also been some use of polyampholytes in the oil-drilling industry (see for example, published British Patent Application GB—A—2,044,321 and U.S. Patent US—A—4,330,450).

Drilling fluids are used in the drilling of earth formations to tap subterranean deposits such as gas or oil. The drilling fluid serves to cool and lubricate the drill bits, to carry the cuttings to the surface as the drilling fluid is circulated in and out of the well, to support at least part of the weight of the drill pipe and drill bit, to provide a hydrostatic pressure head to prevent caving of the walls of the well bore, to deposit on the surface of the well bore a filter cake which acts as a thin semi-impervious layer to prevent undue passage of fluids, and to perform other functions as are well known in the drilling art. It is important that the drilling fluid should exhibit a relatively low rate of filtration or fluid loss, and in addition that it should have desirable rheological properties such as viscosity and gel strength. It is also important that the drilling fluid system should be kept as simple and inexpensive as possible in order to avoid undue expense in the drilling of the well.

Oil-producing formations are generally porous layers having varying degrees of permeability to the flow of fluids such as oil, water and gas. Consequently, the rate of oil production is largely determined by the rate of flow through these permeable formations which, in turn, is dependent upon the porosity or permeability of the sand or stone present. In drilling through such a porous layer, it is desirable to use a drilling fluid having characteristics that prevent excessive amounts of liquids or solids from penetrating through the porous formation. The ability of the drilling fluid to prevent excessive penetration of formation fluid is called filtration control.

Acrylic and methacrylic derivatives, such as those that are copolymerized with hydrocarbon substituted styrenes, such as alphamethylstyrene, para-methylstyrene, and 2,4-dimethylstyrene have been utilized in drilling fluids, (see for exsample, U.S. Patents US—A—2,718,497 and US—A—2,650,905). Acrylic acid derivatives, such as copolymers of acrylamide and sodium acrylate derivatives, have been frequently used commercially as flocculants for drilling fluids, as is disclosed in U.S. Patents US—A—3,558,545 and US—A—3,472,325. Similarly, a copolymer derived from acrylic acid and acrylamide is disclosed in U.S. Patent US—A—3,323,603 as a flocculant for aqueous drilling fluids. Published British Patent Application GB—A—2,044,321 discloses a copolymer additive prepared from (1) a meth(acrylamido alkyl sulfonic acid) or alkali metal salt thereof and (2) a (meth)acrylamide or N-alkyl (meth)acrylamide. The copolymer may be crosslinked with a quaternary ammonium salt.

U.S. Patent Specifications US—A—4,137,969 and US—A—3,744,566 disclose the use of certain acrylic polymers as water-flooding agents in secondary oil recovery. This, however, requires different properties from drilling fluids.

The present invention is based on the discovery that certain specific copolymers containing acrylic acid can be used in conjunction with a clay dispersion to produce improved oil-drilling fluids.

The invention provides an aqueous drilling fluid comprising an aqueous clay dispersion and a carboxylic functional polyampholyte or a salt of it, the polyampholyte or salt having an intrinsic viscosity of at least 0.05 dl/g and having been prepared from

(a) 5 to 90 weight% of acrylic acid;

(b) 0.5 to 85 weight% of at least one cationic-containing monomer that is dimethyldiallyl ammonium chloride, diethyldiallyl ammonium chloride, methacryloyloxyethyl trimethyl ammonium methylsulfate or methacrylamido propyl trimethyl ammonium chloride; and, optionally,

(c) 0 to 85 weight% of non-ionic monomer.

Such an aqueous drilling fluid is, in accordance with the invention, used in a method for drilling a well in a subterranean formation comprising circulating into the well, during drilling, the said aqueous drilling fluid.

Acrylic acid, which is a carboxylic functional monomer, constitutes the anionic component. Mixtures of the cationic-containing monomers may be used in preparing the polyampholyte.

The polyampholyte may also be prepared by polymerizing a monomer containing a tertiary amine as the pendant group with subsequent quaternization of the nitrogen in the polymer to form the cationic mer units.

One or more non-ionic monomers may optionally be used. Examples include: acrylamide and its derivatives, such as methacrylamide and N,N-dimethyl acrylamide; acrylonitrile; vinyl acetate; vinyl pyridine; hydroxyalkyl acrylates; methacrylate and its derivatives; butadiene; styrene and its derivatives, including substituted styrenes; esters of olefinic carboxylic acids; alkylene oxides, divinyl ketones; vinyl ketones; divinyl ethers and alkyl vinyl ethers. Preferably the non-ionic monomer has the formula

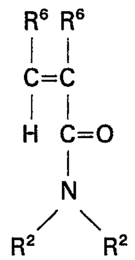

where each $R^6$, which may be the same as or different from the other, is hydrogen, phenyl or $C_{1-3}$ alkyl, preferably hydrogen, methyl, or ethyl, and each $R^2$, which may be the same as or different from the other, is hydrogen or $C_{1-3}$ alkyl. The particularly preferred non-ionic monomer is acrylamide. Mixtures of non-ionic monomers may be used in preparing the polyampholyte.

Non-ionic monomer may be used, and subsequently hydrolysed to obtain the desired amount of anionic component. Likewise, a copolymer may be prepared from non-ionic monomer and cationic monomer with subsequent hydrolysis of the non-ionic monomer to form the anionic portion, e.g. acrylamide can be hydrolysed to form acrylic acid.

The term "aqueous", as used herein, is intended to include water in any physical state and to include water in which is dissolved or dispersed any substance, for example, inorganic salts in brine or seawater.

The polyampholyte polymers may be prepared by mixing the monomers preferably in the presence of a free radical initiator. Any free radical initiator may be used. Examples include peroxides, azo initiators and redox systems. The preferred catalysts are sodium persulfate or a mixture of ammonium persulfate and any azo type initiator, such as 2,2'-azobis-2,4-dimethyl-4-methoxyvaleronitrile). The polymerization may also be initiated photochemically.

The polyampholyte may be made by any of a variety of procedures, for example, in solution, suspension, bulk and emulsions.

The temperature is not critical. The reaction will generally occur between 10 and 100°C, preferably 40 to 60°C. It is generally impracticable to carry out the reaction below room temperature because the reaction is too slow. Above a temperature of 60°C, the molecular weight of the polymer tends to decrease. The reaction, depending on the temperature, generally takes from 1 to 12 hours. Measuring for residual monomer will verify when the reaction is complete.

The pH of the reaction mixture is not critical. The pH is generally in the range of 4.5 to 9.0.

The molecular weight of ampholytic polymers is difficult to measure accurately. The polymers are instead usually identified by intrinsic viscosity. The intrinsic viscosity of the polyampholyte is not critical in the invention. It is preferred that it be at least 0.05 dl/g in 1.0*M* sodium chloride (measured on a 75 Cannon Ubbelohde capillary viscometer).

The clay dispersion may be any finely divided solid that is capable of being dispersed or suspended in an aqueous liquid vehicle. Ordinarily, such material will include hydratable clay or colloidal clay bodies such as Wyoming bentonite, commercial medium-yield drilling clays mined in various parts of the U.S.A. such as Texas, Tennessee and Louisiana, and those produced when clayey subsurface formations are drilled. Weighting materials added to increase specific gravity such as barytes and iron oxide may also be included.

The aqueous medium may be fresh water such as is obtained from wells or streams; it may be salt water from the sea or from wells; or it may even include oil-in-water emulsions, i.e. water which has become contaminated in some way with small quantities of oil, or to which such oil has been added to gain some desired advantage.

It is contemplated that the drilling muds of the invention may also contain other additives besides the polymers of the invention. Materials such as caustic, quebracho and lime may be added to the drilling mud at the surface while other materials such as gypsum and shale may be encountered in subsurface formations during drilling operations.

When used in accordance with the invention, the polymer may be added directly to the drilling mud as dry powder, as a slurry suspended in a suitable liquid, or as a solution in water or some other suitable solvent, and they may be incorporated in it at any convenient point in the mud circulation system. It may be desirable to employ a mixing device such as a cone and jet mixer or the equivalent for incorporating the additive in the mud.

In the carboxylic functional polyampholyte, the acrylic acid unit contains the carboxyl group. It is preferred that the polymer be prepared from 32.5 to 85 percent by weight of acrylic acid, 1.5 to 40 percent by weight of cationic monomer; and 5 to 65 percent by weight of non-ionic monomer.

The quantity of the polymer to be used in drilling mud applications will vary with circumstances over a reasonably wide range and the amount used in a specific suspension or dispersion will depend on these circumstances and the characteristics of the drilling fluid treated. Ordinarily, satisfactory results with regard to water loss reduction will be obtained with quantities ranging from 1 to 4 pounds per 42-gallon barrel (28.5 to 114 kg/$m^3$) of drilling mud. For optimum reduction in filtration rate with certain drilling muds, however, quantities up to 6 pounds per 42-gallon barrel (171 kg/$m^3$) may be required. On the other hand, in

some cases where, for example, only small improvement in filtration rate is desired, as little as 0.125 pound of the additive per barrel (3.5 kg/$m^3$) of mud will produce the desired effect. The exact amount to be added, as previously pointed out, depends upon the original character of the mud and on the properties desired. This can be determined, as is customary in the field, by simple tests at the time the addition is made.

The carboxylic functional polyampholyte may be prepared by mixing the monomers, preferably in the presence of a free radical initiator. Any free-radical initiator may be used. Examples include peroxides, azo initiators and redox systems. The polymerization may also be initiated photochemically. The preferred catalysts are sodium persulphate or a mixture of ammonium persulphate and any azo-type initiator, such as 2,2'-azobis-(2,4-dimethyl-4-methoxyvaleronitrile).

Examples

The polymers indicated in Table I were added to an aqueous clay dispersion and the viscosity and fluid loss measured. 10 g of Bentonite clay was added to 200 $cm^3$ of deionized water and sheared for 15 minutes. Then 105 g of a solution containing 180 g of KCl in 1000 g of total solution was added to the slurry and the mixture was sheared for 5 minutes. For the sea water evaluation, 15 g of Bentonite clay was added to 200 $cm^3$ of deionized water and sheared for 15 minutes. Then 105 g of a solution containing 175 g sea salt in 1000 g total solution was added to the slurry and the mixture was sheared for 5 minutes. The sea salt used was Instant Ocean®, a product manufactured by Aquarium Systems. To both mixtures, 2 g of active polymer dissolved in 50 g total solution (pH adjusted to 8.5 with NaOH) was added with continued shearing for 15 minutes. The viscosity of this slurry was measured on a (Fann) Viscometer (Model 35) at 600 rpm and 300 rpm. The 30-minute fluid loss (FL), in mls, was measured on a (Fann (Model 12) BC) Filter Press under 100 psi (0.7 MPa) of nitrogen.

TABLE I

| | | Performance (KCl) | | | Performance (Sea salt) | | | |
|---|---|---|---|---|---|---|---|---|
| Example | Polymer | 600 | 300 | FL | 600 | 300 | FL | [η] |
| 1 | — | 29 | 28 | 131.0 | 20 | 16 | 60 | — |
| 2 | 20 | 23 | 13 | 9.5 | — | — | — | >4.3 |
| 3 | 21 | 12 | 6.5 | 31.5 | — | — | — | >4.3 |
| 4 | 29 | 7 | 4 | 15.0 | — | — | — | 1.1 |
| 5 | 26 | 10 | 5 | 18.9 | — | — | — | 2.25 |
| 6 | 27 | 22 | 15 | 10.5 | — | — | — | >4.3 |
| 7 | 22 | 13 | 6 | 10.5 | — | — | — | — |
| 8 | 23 | 14 | 8 | 48.0 | — | — | — | — |
| 9 | 24 | 66 | 52 | 82 | — | — | — | — |
| 10 | 1 | 13 | 7 | 11.5 | 10 | 5 | 8 | 1.8 |
| 11 | 16 | 13 | 6 | 13.8 | 14 | 7 | 27 | 1.0 |
| 12 | 6 | 8 | 5 | 25 | 13 | 10 | 42 | 0.82 |
| 13 | 19 | 16 | 9 | 7.9 | 40 | 34 | 84 | 4.3 |
| 14 | 2 | 8 | 4 | 17.0 | 15 | 7 | 12 | 1.3 |
| 15 | 28 | 15 | 9 | 25.9 | — | — | — | >4.3 |
| 16 | 59 | 10 | 5 | 11.0 | — | — | — | — |

The polymers of the examples were produced by mixing the cationic, anionic and optional non-ionic monomers indicated in Table II, using the amounts, solids concentration, initial temperatures and pH indicated. The monomer mix was purged with nitrogen for one hour. The solvent was deionized water. The initiator was added and the components allowed to react for about 3 hours.

In the case of Polymer 59, a 90/10 acrylamide/dimethyldiallyl ammonium chloride copolymer was prepared in the same manner. This copolymer was then hydrolysed by adding a stoichiometric amount of sodium hydroxide to achieve a 70/20/10 terpolymer of acrylic acid/acrylamide/dimethyldiallyl ammonium chloride.

TABLE II

| Polymer | Monomer cationic/anion/non-ionic | Weight percent | Initiator (Moles initiator/moles monomer) | Percent solids | pH | Temperature (0°C) | [η] |
|---|---|---|---|---|---|---|---|
| 1 | DMDAAC/AA/AM | 1.5/48.2/50.3 | .003 SPS/$1.6\times10^{-4}$ SMBS | 30 | 4.5 | 50 | 1.8 |
| 2 | DMDAAC/AA/AM | 2.5/32.5/65 | .003 SPS/$1.6\times10^{-4}$ SMBS | 30 | 4.5 | 50 | 1.3 |
| 6 | DMDAAC/AA/AM | 5/83/10 | .003 SPS/$1.6\times10^{-4}$ SMBS | 30 | 4.5 | 50 | 0.82 |
| 16 | DMDAAC/AA/AM | 17.5/32.5/50 | .003 SPS/$1.6\times10^{-4}$ SMBS | 30 | 4.5 | 50 | 1.0 |
| 19 | DMDAAC/AA/AM | 25/70/5 | .003 SPS/$1.6\times10^{-4}$ SMBS | 30 | 4.5 | 50 | 4.3 |
| 20 | DMDAAC/AA/DMAM | 20/70/10 | .003 APS/.0005 ADM | 10 | 7.0 | 60 | 4.3 |
| 21 | DMDAACAA/MA | 20/70/10 | .003 APS/.0005 ADM | 10 | 7.0 | 60 | 4.3 |
| 22 | DMDAAC/AA | 30/70 | .003 SPS/$6.4\times10^{-5}$ SMBS | 15 | 7.0 | 60 | — |
| 23 | DMDAAC/AA/Vinyl acetate | 20/70/10 | .003 SPS/$6.4\times10^{-5}$ SMBS | 10 | 7.0 | 50 | — |
| 24 | DMDAAC/AA/Styrene | 10/70/20 | .003 SPS/$6.4\times10^{-5}$ SMBS | 20 | 4.5 | 50 | — |
| 26 | MAPTAC/AA/AM | 20/70/10 | .003 APS/.0005 ADM | 10 | 70 | 60 | 4.3 |
| 27 | MAPTAC/AA/AM | 40/40/20 | .003 APS/.0005 ADM | 10 | 7.0 | 50 | 2.25 |
| 28 | METAMS/AA/AM | 10/70/10 | .002 APS | 10 | 7.0 | 40 | 4.3 |
| 29 | VTPPB/AA/AM | 10/70/20 | .003 APS/.0005 ADM | 10 | 7.0 | 60 | 1.1 |

DMDAAC=dimethyldiallyl ammonium chloride
AA=acrylic acid
AM=acrylamide
DMAM=N,N-dimethylacrylamide
MA=methacrylamide
MAPTAC=methacrylamido propyl trimethyl ammonium chloride
METAMS=methacryloyloxyethyl trimethyl ammonium methylsulfate
SPS=sodium persulfate
SMBS=sodium metabisulfite
APS=ammonium persulfate
ADM=2,2′-azobis-(2,4-dimethyl-4-methoxyvaleronitrile)
[η] is in dl/g in 1.0 *M* sodium chloride, measured on a Cannon Ubbelohde Capillary Viscometer

**Claims**

1. An aqueous drilling fluid comprising an aqueous clay dispersion and a carboxylic functional polyampholyte or a salt of it, the polyampholyte or salt having an intrinsic viscosity of at least 0.05 dl/g and having been prepared from

(a) 5 to 90 weight% of acrylic acid;

(b) 0.5 to 85 weight% of at least one cationic-containing monomer that is dimethyldiallyl ammonium chloride, diethyldiallyl ammonium chloride, methacryloyloxyethyl trimethyl ammonium methylsulfate or methacrylamido propyl trimethyl ammonium chloride; and, optionally,

(c) 0 to 85 weight% of non-ionic monomer.

2. An aqueous drilling fluid as claimed in Claim 1, in which the polyampholyte has been prepared from

(a) 32.5 to 85 weight% of the acrylic acid;

(b) 1.5 to 40 weight% of the cationic-containing monomer; and

(c) 5 to 65 weight% of the non-ionic monomer.

3. A method for drilling a well in a subterranean formation, comprising circulating into the well, during drilling, an aqueous drilling fluid as claimed in Claim 1 or 2.

**Patentansprüche**

1. Wässrige Bohrflüssigkeit, enthaltend eine wässrige Tondispersion und einen Carboxylfunktionalisierten Polyampholyten oder ein Salz davon, wobei der Polyampholyt oder sein Salze eine Intrinsicviskosität von wenigstens 0,05 dl/g aufweist und hergestellt worden ist aus

(a) 5 bis 90 Gew.-% Acrylsäure;

(b) 0,5 bis 85 Gew.-% wenigstens eines Kationen-haltigen Monomeren, welches Dimethyldiallylammoniumchlorid, Diethyldiallylammoniumchlorid, Methacryloyloxyethyltriethylammoniummethylsulfat oder Methacrylamidopropyltrimethylammoniumchloride ist; und, gegebenenfalls,

(c) 0 bis 85 Gew.-% nichtionischem Monomer.

2. Wässrige Bohrflüssigkeit nach Anspruch 1, worin der Polyampholyt hergestellt worden ist aus

(a) 32,5 bis 85 Gew.-% Acrylsäure;

(b) 1,5 bis 40 Gew.-% Kationen-haltigem Monomeren; und

(c) 5 bis 65 Gew.-% nichtionischem Monomer.

3. Verfahren zum Bohren eines Bohrlochs in einer unterirdischen Formation, bei dem während des Bohrens in das Bohrloch eine wässrige Bohrflüssigkeit nach Anspruch 1 oder 2 zirkuliert.

**Revendications**

1. Fluide de forage aqueux comprenant une dispersion d'argile aqueuse et un polyampholyte fonctionnel carboxylique ou un de ses sels, le polyampholyte ou sel ayant une viscosité intrinsèque d'au moins 0,05 dl/g et ayant été préparé à partir de

(a) 5 à 90% en poids d'acide acrylique;

(b) 0,5 à 85% en poids d'au moins un monomère contenant des cations qui est le chlorure de diméthyldiallyl-ammonium, le chlorure de diéthyldiallylammonium, le méthylsulfate de méthacryloyloxy-éthyl-triméthyl-ammonium ou le chlorure de méthacrylamido-propyl-triméthyl-ammonium; et, le cas échéant,

(c) 0 à 85% en poids de monomère non ionique.

2. Fluide de forage aqueux selon la revendication 1, où le polyampholyte a été préparé à partir de

(a) 32,5 à 85% en poids de l'acide acrylique;

(b) 1,5 à 40% en poids du monomère contenant des cations; et

(c) 5 à 65% en poids du monomère non ionique.

3. Procédé pour forer un puits dans une formation souterraine, dans lequel on fait circuler dans le puits, pendant le forage, un fluid de forage aqueux selon les revendications 1 et 2.